Europäisches Patentamt

European Patent Office

Office européen des brevets

(19)

(11) Numéro de publication : **0 083 545**
**B1**

(12)

# FASCICULE DE BREVET EUROPÉEN

(45) Date de publication du fascicule du brevet :
**26.03.86**

(51) Int. Cl.⁴ : **G 21 C 15/18, F 28 D 7/00**

(21) Numéro de dépôt : **82402399.8**

(22) Date de dépôt : **30.12.82**

(54) **Dispositif d'évacuation de secours de la chaleur dissipée par un réacteur nucléaire à neutrons rapides à l'arrêt.**

(30) Priorité : **31.12.81 FR 8124596**

(43) Date de publication de la demande :
**13.07.83 Bulletin 83/28**

(45) Mention de la délivrance du brevet :
**26.03.86 Bulletin 86/13**

(84) Etats contractants désignés :
**BE DE GB IT LU NL**

(56) Documents cités :
**EP-A- 0 004 218**
**FR-A- 2 096 970**
**FR-A- 2 129 508**
**FR-A- 2 179 839**
**FR-A- 2 293 684**
**US-A- 3 805 890**

(73) Titulaire : **NOVATOME**
**20 Avenue Edouard Herriot**
**F-92350 Le Plessis Robinson (FR)**

(72) Inventeur : **Cornu, Bernard**
**7 résidence de la Faisanderie**
**F-78340 Les Clayes-sous-Bois (FR)**
Inventeur : **Lion, René**
**43 bis rue de Tennerolles**
**F-92210 Saint-Cloud (FR)**

(74) Mandataire : **Bressand, Georges et al**
**c/o CABINET LAVOIX 2 Place d'Estienne d'Orves**
**F-75441 Paris Cedex 09 (FR)**

Jouve, 18, rue St-Denis, 75001 Paris, France

## Description

L'invention concerne un dispositif d'évacuation de secours de la chaleur dissipée par un réacteur nucléaire à neutrons rapides à l'arrêt.

Un tel réacteur comporte généralement un cœur constitué par des assemblages combustibles plongés dans un métal liquide tel que le sodium remplissant la cuve du réacteur qui est elle-même fermée par une dalle de forte épaisseur.

Le sodium liquide constitue le fluide de refroidissement du cœur qui recueille la chaleur dégagée par les assemblages combustibles.

Des composants traversent la dalle du réacteur et plongent dans le sodium liquide remplissant la cuve. C'est ainsi que des pompes de circulation du fluide primaire et des échangeurs intermédiaires plongeant dans le sodium liquide permettent l'extraction de la chaleur du réacteur pendant le fonctionnement de celui-ci.

Dans le cas où l'on arrête le réacteur en introduisant dans les assemblages combustibles des barres de commande en position d'insertion maximum, la réaction nucléaire s'arrête, les neutrons produits par le cœur étant absorbés par les barres de commande.

Le réacteur nucléaire continue cependant à produire une certaine quantité de chaleur, à cause de l'activité résiduelle du cœur du réacteur.

Aussitôt après l'arrêt, la puissance du réacteur ne tombe pas à une valeur nulle mais très vite à une fraction de pour cent de la puissance nominale pour ne diminuer que lentement par la suite.

Cette puissance résiduelle pour des gros réacteurs de 3 000 MW thermique par exemple est cependant importante en valeur absolue et conduit à une augmentation de la température interne qui peut être dangereuse à partir d'un certain niveau.

Pendant la phase d'arrêt, le cœur du réacteur continue donc à dissiper une certaine quantité de chaleur due aux réactions nucléaires des matériaux le constituant qui ont été activés pendant la phase de fonctionnement du réacteur.

Il est nécessaire d'évacuer la chaleur ainsi dissipée par le réacteur et recueillie par le sodium liquide constituant le fluide primaire pour éviter une élévation de température excessive à l'intérieur de la cuve.

Cette évacuation de chaleur est assurée normalement par le dispositif de prélèvement de la chaleur du réacteur en fonctionnement. Ce dispositif comporte des échangeurs intermédiaires qui prélèvent la chaleur du fluide primaire, à l'intérieur de la cuve, par mise en contact thermique de celui-ci avec le fluide secondaire, généralement constitué par du sodium liquide, qui lui-même est utilisé pour l'échauffement d'eau alimentaire et sa transformation en vapeur.

Ce dispositif d'évacuation de la chaleur du réacteur comporte généralement plusieurs ensembles indépendants comportant chacun une pompe de circulation, un ou plusieurs échangeurs et un générateur de vapeur.

Dans le cas où le réacteur est à l'arrêt, la fonction d'évacuation de la chaleur résiduelle du réacteur peut être assurée par un seul ensemble de moyens tels que décrits ci-dessus, puisque la puissance à évacuer n'est qu'une fraction faible de la puissance totale du réacteur.

Dans le cas où l'un ou plusieurs de ces ensembles devient inutilisable la fonction peut être assurée par un seul de ces ensembles.

Cependant, dans le cas où l'arrêt du réacteur est consécutif à un accident très grave sur le réacteur, il est possible qu'aucun des ensembles d'évacuation de la chaleur du réacteur en fonctionnement normal ne soit disponible.

On prévoit donc sur les réacteurs de taille importante un dispositif totalement indépendant du circuit de refroidissement normal du réacteur, pour l'évacuation de la chaleur dissipée par le réacteur à l'arrêt.

Un tel dispositif auxiliaire d'évacuation de chaleur comprend un ou plusieurs échangeurs du type sodium-sodium plongeant directement dans le sodium contenu dans la cuve du réacteur et un ou plusieurs échangeurs du type sodium-air pour le refroidissement du sodium secondaire de l'échangeur de chaleur sodium-sodium.

Le sodium primaire est ainsi refroidi au contact du sodium secondaire dans l'échangeur de chaleur sodium-sodium et le sodium secondaire est lui-même refroidi à l'intérieur d'un échangeur sodium-air avant d'être renvoyé à l'échangeur sodium-sodium.

L'utilisation de sodium secondaire permet d'éviter une mise en contact du sodium primaire contenu dans la cuve et présentant une certaine radio-activité avec l'air de refroidissement, à l'extérieur de la cuve.

Pour qu'un tel dispositif d'évacuation de chaleur dans le réacteur à l'arrêt puisse fonctionner en remplacement du dispositif de prélèvement normal de la chaleur du réacteur, après un accident ayant mis ce dispositif de prélèvement normal hors d'usage, il faut que le dispositif auxiliaire d'évacuation de la chaleur soit d'un fonctionnement très sûr, d'une grande résistance et comprenne très peu d'éléments actifs.

En effet, dans le cas d'un séisme ayant endommagé le réacteur ou dans le cas d'un accident dans le cœur détruisant celui-ci de façon qu'il soit hors d'état de fonctionner mais que son confinement subsiste, il est nécessaire de garder une possibilité d'évacuer la chaleur due à l'activité résiduelle du cœur du réacteur.

En outre, les échangeurs sodium-sodium utilisés pour le prélèvement de la chaleur dissipés par le réacteur à l'arrêt doivent avoir un encombrement faible sur la dalle du réacteur qui porte un nombre important de composants, certains de très grande dimension comme les pompes primaires et les échangeurs intermédiaires assurant la circulation du fluide primaire et le prélèvement de chaleur pendant le fonctionnement normal du réacteur. Les échangeurs sodium-sodium du dispositif d'évacuation de chaleur auxiliaire doivent donc présenter un diamètre faible, par exemple inférieur à 600 mm.

On connaît des échangeurs de chaleur comportant une enveloppe externe ouverte à sa partie inférieure plongeant dans le sodium de la cuve et renfermant un faisceau de tubes enroulés en hélice à l'intérieur desquels circule le sodium de refroidissement secondaire. Ces tubes sont reliés à deux plaques tubulaires dont l'une débouche à l'intérieur de la partie supérieure de l'échangeur de chaleur dans une zone où arrive le sodium secondaire et dont l'autre débouche dans une zone d'évacuation du sodium secondaire échauffé.

Cependant, un tel dispositif ne présente pas une résistance suffisante pour que son fonctionnement soit assuré en cas de sollicitations externes de grande ampleur telles que celles accompagnant un séisme.

En outre, dans un tel dispositif, le faisceau de tubes hélicoïdaux occupe une fraction importante du volume intérieur de l'enveloppe externe si bien que la circulation de sodium primaire en contact avec les tubes du faisceau est considérablement ralentie. On doit établir une circulation forcée du sodium à l'intérieur de l'enveloppe de l'échangeur de chaleur et cette circulation forcée nécessite des éléments actifs tels que des pompes, en particulier du type mécanique, qui peuvent être facilement mises hors d'usage en cas de séisme.

Le but de l'invention est donc de proposer un dispositif d'évacuation de secours de la chaleur dissipée par un réacteur nucléaire à neutrons rapides refroidi par du métal liquide, à l'arrêt, le dispositif d'évacuation de chaleur comportant au moins un échangeur de chaleur liquide-liquide constitué par une enveloppe externe ouverte à sa partie inférieure plongeant dans le fluide de refroidissement et renfermant un faisceau de tubes fixés sur au moins une plaque tubulaire à l'intérieur de l'enveloppe et comportant chacun une partie rectiligne puis une partie enroulée en hélice et une autre partie rectiligne et, à l'intérieur desquels circule un liquide dont le refroidissement est assuré par au moins un échangeur de chaleur utilisant de l'air pour le refroidissement du liquide, ce dispositif d'évacuation de chaleur devant continuer à fonctionner même en cas d'incidents très graves sur le réacteur nucléaire, tels qu'un séisme, sans l'aide d'éléments actifs pour la mise en circulation du fluide de refroidissement primaire.

Dans ce but, l'enveloppe externe de l'échangeur de chaleur liquide-liquide, de forme cylindrique allongée, disposée avec son axe vertical lors de sa mise en service, dans la cuve du réacteur, est constituée, au moins dans sa partie inférieure, par une virole d'une épaisseur telle qu'elle ne se déforme pas sous l'effet des contraintes dues à un accident prévisible dans le réacteur nucléaire, percée sur toute la hauteur immergée dans le fluide de refroidissement primaire, d'ouvertures permettant la circulation naturelle du fluide de refroidissement en contact avec les tubes du faisceau disposés à l'intérieur de la virole, et comportant chacun une partie droite d'arrivée et une partie droite de retour du liquide, de grande longueur séparées par une partie en hélice formant une boucle à faible nombre de spires ayant une inclinaison faible par rapport au plan horizontal, le diamètre d'enroulement des tubes étant constant et identique pour tous les tubes et très légèrement inférieur de la virole qui réalise le maintien des tubes, en cas de sollicitations externes.

Afin de bien faire comprendre l'invention, on va maintenant décrire à titre d'exemple non limitatif, en se reportant aux figures jointes en annexe, un mode de réalisation d'un dispositif d'évacuation de chaleur suivant l'invention, dans le cas d'un réacteur nucléaire à neutrons rapides refroidi par du sodium liquide.

La figure 1 représente dans une vue en élévation l'ensemble de l'échangeur liquide-liquide du dispositif d'évacuation de la chaleur du réacteur à l'arrêt.

La figure 2 représente une vue en coupe par un plan vertical de symétrie de la partie supérieure de cet échangeur de chaleur.

La figure 3 représente dans une vue en coupe par un plan vertical de symétrie, la partie inférieure de l'échangeur de chaleur.

La figure 4 représente dans sa partie droite une coupe suivant A-A de la figure 3 et dans sa partie gauche une coupe suivant B-B de la figure 3.

La figure 5 représente, dans une vue en coupe transversale analogue à la coupe B-B, une variante de réalisation des entretoises de maintien des parties droites des tubes.

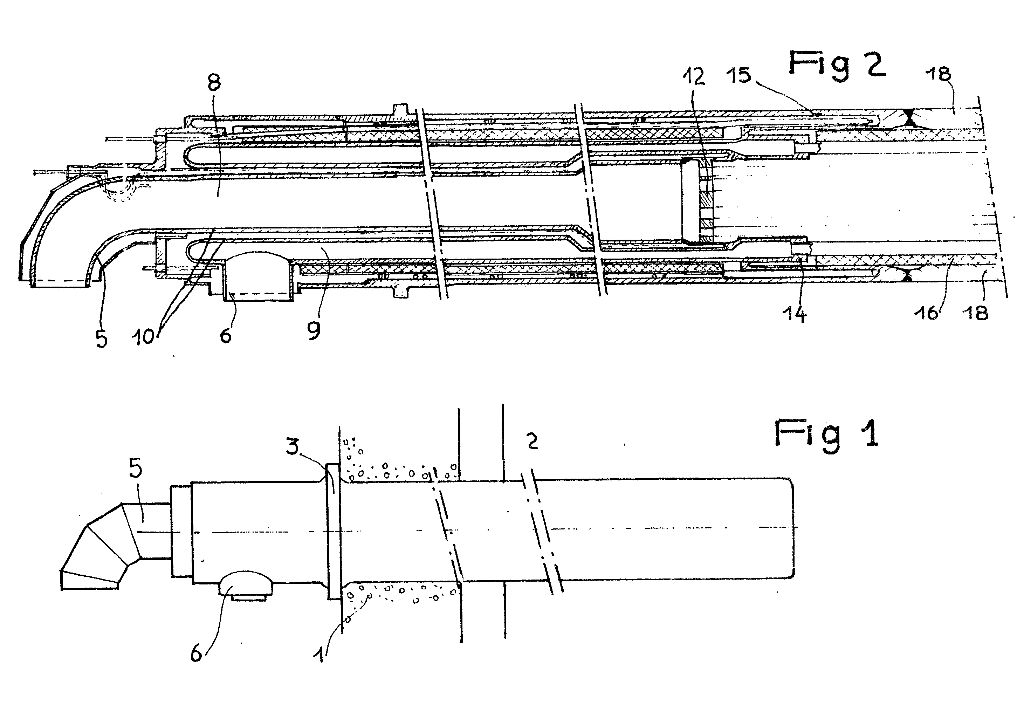

Sur la figure 1, on voit un échangeur de chaleur dont la partie supérieure est disposée au-dessus de la dalle 1 fermant la cuve d'un réacteur nucléaire à neutrons rapides et dont la partie inférieure plonge sous le niveau 2 du sodium liquide remplissant la cuve du réacteur contenant le cœur de celui-ci.

L'échangeur de chaleur s'appuie sur la dalle par l'intermédiaire d'une bride 3 et comporte, dans sa partie située au-dessus de la dalle, une tubulure 5 pour l'arrivée de sodium secondaire dans l'échangeur et une tubulure 6 pour le retour de ce sodium après son échauffement par le sodium liquide primaire dans lequel plonge la partie inférieure de l'échangeur.

Les tubulures 5 et 6 sont reliées à des canalisations faisant partie d'un circuit sur lequel sont disposés une pompe de circulation et un échangeur de chaleur sodium-air permettant le refroidissement du sodium secondaire.

Comme il est visible sur la figure 2, la tubulure 5 débouche dans un espace cylindrique vertical 8 ménagé à la partie centrale de l'échangeur de chaleur alors que la tubulure 6 débouche dans un espace périphérique annulaire 9 séparé de l'espace cylindrique par une double paroi 10.

Dans l'espace interne de la double paroi 10 est envoyé un gaz de balayage tel que de l'argon qui permet d'isoler thermiquement l'espace 8 de l'espace 9 de l'échangeur de chaleur.

Le sodium secondaire refroidi pénètre donc dans l'échangeur par l'espace central 8 alors que le sodium échauffé ressort de l'échangeur par l'espace périphérique 9.

L'espace central 8 communique à sa partie inférieure avec une plaque tubulaire 12 sur laquelle sont fixées les extrémités d'entrée des tubes du faisceau.

A sa partie inférieure, l'espace périphérique 9 communique avec une plaque tubulaire annulaire 14 sur laquelle sont fixées les extrémités de sortie des tubes du faisceau.

Sur toute sa partie supérieure représentée à la figure 2, l'enveloppe extérieure 15 du générateur de vapeur est constituée sous forme d'une double enveloppe dont l'espace intérieur est occupé par un calorifuge 16.

La zone de sortie et d'entrée du sodium secondaire dans l'échangeur de chaleur, au niveau des tubulures 5 et 6, est également garantie contre les déperditions calorifiques par une couche de matière calorifuge entourant l'échangeur de chaleur.

De cette façon, le sodium secondaire refroidi est isolé du sodium secondaire chaud ayant circulé en contact thermique avec le sodium primaire, dans toute la partie supérieure de l'échangeur de chaleur, au-dessus des plaques tubulaires 12 et 14.

Le sodium secondaire est également isolé thermiquement du milieu extérieur.

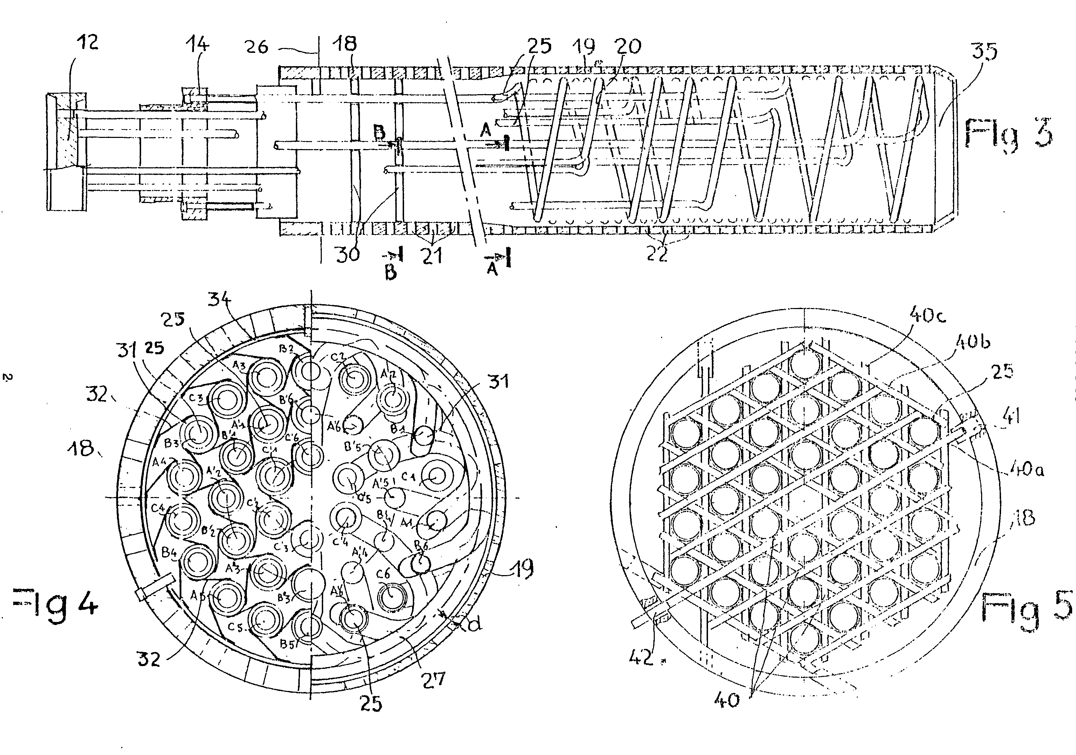

Sur la figure 3, on voit la partie inférieure de l'échangeur de chaleur, en dessous des plaques tubulaires 12 et 14. Cette partie de l'échangeur est constituée par une virole 18 de grande épaisseur reliée par soudage à la double enveloppe 15 de la partie supérieure de l'échangeur de chaleur, à sa partie supérieure et à une virole 19 de plus faible épaisseur à sa partie inférieure.

L'ensemble des viroles 18 et 19 renfermant le faisceau 20 présente une très grande rigidité et une très grande résistance mécanique. L'épaisseur des viroles 18 et 19 a été choisie de façon que l'ensemble puisse protéger efficacement le faisceau 20 en cas de séisme et aussi en cas d'accident du cœur, pour garder une possibilité de refroidissement du sodium primaire remplissant la cuve du réacteur.

Par exemple, dans le cas d'un échangeur de chaleur dont la hauteur en dessous du niveau de la bride d'appui 3 est de l'ordre de 9 mètres, l'épaisseur de la virole 18 est de 2,5 cm et l'épaisseur de la virole 19 de 0,75 cm.

Les viroles 18 et 19 sont percées, sur toute leur partie immergée dans le sodium, d'ouvertures 21 et 22 respectivement. Ces ouvertures 21 et 22 permettent une circulation du sodium primaire remplissant la cuve à l'intérieur des viroles 18 et 19, en contact avec les tubes du faisceau 20. Ces ouvertures sont de forme circulaire.

On va maintenant décrire ce faisceau 20 en se reportant aux figures 3 et 4.

Le faisceau 20 est constitué par un ensemble de tubes 25 comportant chacun une partie droite d'arrivée du sodium liquide de grande longueur fixée à son extrémité supérieure sur la plaque tubulaire 12, une partie droite de retour du sodium liquide de grande longueur fixée à son extrémité supérieure sur la plaque tubulaire 14 et une liaison entre ces deux parties droites constituée par une boucle en hélice peu inclinée sur l'horizontale et dont le diamètre d'enroulement est très peu inférieur au diamètre inférieur de la virole 19.

Les parties droites des tubes sont disposées à l'intérieur de la virole 18 et les boucles en hélice, dont le diamètre d'enroulement est constant et identique pour tous les tubes, à l'intérieur de la virole 19.

Chaque boucle en hélice des tubes comporte environ une spire et demie et est imbriquée avec les boucles en hélice des deux autres tubes voisins 25 du faisceau pour constituer une hélice à pas multiple.

Comme il est visible sur la figure 4, le faisceau comporte dix-huit tubes dont les extrémités de sortie sont reliées à la plaque tubulaire 14 suivant une rangée et dont les extrémités d'arrivée sont reliées à la plaque 12 suivant deux rangées dont l'une comporte douze extrémités de tubes et l'autre six extrémités.

On a désigné les branches droites de sortie et les boucles des tubes, suivant la position angulaire des branches droites de sortie de ces tubes, par les lettres A, B et C suivies d'un indice qui est l'un des chiffres 1, 2, 3, 4, 5 et 6.

La branche droite de sortie d'un tube est désignée de la même façon que la branche d'arrivée et la boucle en hélice, mais avec l'indice'.

A la branche de sortie et à la boucle $A_1$ correspond ainsi la branche droite d'arrivée $A_1'$.

Ainsi qu'il est visible sur la figure 3, les boucles en hélice des tubes sont disposées les unes à la suite des autres, dans la direction verticale et de façon imbriquée.

Les branches d'arrivée et de départ des tubes 25 disposées successivement suivant la hauteur de l'échangeur de chaleur, par exemple $B_1$, $B_6$, $B_4$, sont disposées angulairement à 120 °C les unes des autres comme il est visible sur la figure 4.

De cette façon l'ensemble des boucles constitue une hélice comportant trois tubes par pas.

Les tubes 25 ont des longueurs qui ne sont pas trop différentes puisque seules les parties droites de ces tubes ont des longueurs différentes, en fonction de la position de la boucle en hélice suivant la hauteur de l'échangeur de chaleur.

D'autre part le diamètre d'enroulement de toutes les spires étant identique, la circulation du sodium primaire à l'intérieur de la virole 19, en contact avec le faisceau, peut se faire à l'intérieur du canal ménagé par les spires successives disposées les unes au-dessus des autres.

La section de passage du sodium primaire est donc importante, si bien qu'il n'est pas nécessaire de produire une circulation forcée et que la convection naturelle suffit à assurer la circulation de ce sodium primaire.

En effet, en fonctionnement, l'échangeur plonge dans le sodium primaire jusqu'au niveau 26 et les ouvertures 21 et 22 permettent l'arrivée de sodium primaire à l'intérieur des viroles 18 et 19 renfermant le faisceau.

Du sodium froid étant amené dans le faisceau, le sodium primaire qui pénètre par tous les orifices des viroles 19 et 18 se refroidit au contact de ces tubes, descend à l'intérieur des viroles 19 et 18 au contact des tubes du faisceau en se refroidissant de plus en plus, pour ressortir à la partie inférieure de l'échangeur de chaleur.

Une circulation par convection naturelle descendante est ainsi établie à l'intérieur des viroles 18 et 19.

D'autre part, on voit sur la figure 4 que l'espace d existant entre les spires des boucles en hélice des tubes et la paroi intérieure de la virole 19 est très petit et que des plaques telles que 27 sont soudées sur cette paroi interne pour réaliser le centrage et le maintien du faisceau dans les directions horizontales.

De cette façon, le faisceau est parfaitement maintenu à l'intérieur de la virole 19 qui est elle-même fixée de façon très rigide grâce à la virole 18, à la partie inférieure de l'échangeur de chaleur.

Cet échangeur de chaleur fixé rigidement sur la dalle 1 du réacteur constitue donc un ensemble résistant, en cas de séisme ou d'incidents importants sur le réacteur. Il suffit donc d'assurer une circulation continue du sodium secondaire à l'intérieur des tubes de l'échangeur pour que la fonction de refroidissement du fluide primaire continue à être assurée.

A titre d'exemple un échangeur de diamètre 400 mm et plongeant dans 4,5 mètres de sodium primaire permet d'évacuer 6 MW thermique.

Sur la partie de gauche de la figure 4 et sur la figure 3 on voit que les parties droites des tubes sont maintenues à l'intérieur de l'échangeur de chaleur en des positions précises grâce à des entretoises 30 espacées suivant la hauteur de l'échangeur.

Ces entretoises sont constituées par un ensemble de bagues 31 entourant les tubes 25 avec un certain jeu et reliées par soudure chacune à trois éléments de fixation 32.

Les éléments de fixation 32 permettent de relier les bagues 31 entre elles et de relier l'ensemble de ces bagues à une virole cylindrique 34 elle-même fixée sur la surface interne de la virole 18.

Pour cela, un des dispositifs 32 associé à chacune des bagues situées à la périphérie de l'échangeur, c'est-à-dire les bagues associées aux branches droites de retour du sodium liquide, est fixé par soudure sur la virole 34.

Grâce aux entretoises 30, l'ensemble du faisceau de tubes est maintenu en position précise à l'intérieur de l'enveloppe de l'échangeur de chaleur.

Sur la figure 5, on voit un second mode de réalisation des entretoises destinées à maintenir les parties droites des tubes 25. Des barres horizontales 40 sont fixées par soudure sur l'enveloppe 18 par l'une de leurs extrémités 42, à l'intérieur d'une ouverture traversant cette enveloppe et engagées par leur autre extrémité solidaire d'une pièce de jonction 41, dans une autre ouverture de l'enveloppe 18. Ces barres sont disposées entre les tubes 25. Un premier ensemble de barres horizontales 40a est dirigé dans une première direction du plan transversal. Un second ensemble de barres 40b est disposé en dessous de l'ensemble des barres 40a avec un certain espacement et dans une seconde direction faisant un angle de 120° avec la direction des barres 40a du premier ensemble. Un troisième ensemble 40c est disposé en dessous de l'ensemble 40b et se compose de barres faisant un angle de 120° avec les barres des ensembles 40a et 40b.

Les parties droites des tubes 25 sont ainsi parfaitement maintenues dans toutes les directions du plan transversal, grâce à des jeux de trois ensembles de barres parallèles horizontales superposées, régulièrement répartis sur la longueur de la partie rectiligne des tubes 25. Cette réalisation des entretoises permet également de gêner le moins possible la circulation du sodium liquide en contact avec les tubes du faisceau.

La partie inférieure de la virole 18 comporte un rétreint 35 permettant de retenir le faisceau de tubes en cas de rupture totale ou partielle de celui-ci. On évite ainsi une chute du faisceau dans la cuve du réacteur nucléaire.

On voit que les principaux avantages du dispositif suivant l'invention sont qu'il peut fonctionner sans moyens actifs pour la circulation du sodium primaire en contact avec les tubes du faisceau et qu'il peut résister à des sollicitations externes importantes telles que celles accompagnant un séisme ou un accident dans le cœur.

La résistance aux sollicitations externes de l'échangeur de chaleur provient du fait que l'enveloppe du faisceau tubulaire présente une grande rigidité et une grande résistance mécanique et maintient solidement le faisceau dont les spires de retournement ont un diamètre voisin du diamètre intérieur de l'enveloppe.

En outre, la circulation du sodium liquide primaire à l'intérieur de cette enveloppe, en contact avec les tubes du faisceau, est grandement facilitée par le fait que toutes les spires ont un même diamètre et sont empilées verticalement à l'intérieur de l'échangeur de chaleur. Ces spires participent activement au refroidissement.

Il est bien évident que l'invention ne se limite pas au mode de réalisation qui vient d'être décrit.

C'est ainsi qu'on peut imaginer des tubes disposés différemment pour constituer le faisceau, que ces tubes peuvent avoir une portion en hélice comportant un nombre de spires plus ou moins important et qu'ils peuvent être reliés différemment à une ou plusieurs plaques tubulaires.

Il est bien évident également que le nombre de tubes du faisceau peut être quelconque.

Afin de ne pas trop compliquer la construction et la structure de l'échangeur de chaleur, il est cependant préférable d'avoir un nombre de tubes le plus réduit possible, compatible avec l'efficacité recherchée du dispositif d'échange de chaleur.

Enfin, le dispositif suivant l'invention s'applique à tous les réacteurs nucléaires à neutrons rapides comportant une cuve renfermant un fluide primaire quelle que soit la nature de ce fluide primaire de refroidissement.

**Revendications**

1. Dispositif d'évacuation de secours de la chaleur dissipée par un réacteur nucléaire à neutrons rapides refroidi par du sodium liquide, à l'arrêt, le dispositif d'évacuation de chaleur comportant au moins un échangeur de chaleur liquide-liquide constitué par une enveloppe externe (15, 18, 19) ouverte à sa partie inférieure plongeant dans le fluide de refroidissement primaire et renfermant un faisceau (20) de tubes (25) fixés sur au moins une plaque tubulaire (12, 14) à l'intérieur de l'enveloppe (15, 18, 19) et comportant chacun une partie rectiligne, puis une partie enroulée en hélice et une autre partie rectiligne et à l'intérieur desquels circule un liquide dont le refroidissement est assuré par au moins un échangeur utilisant de l'air pour le refroidissement du liquide, caractérisé par le fait que l'enveloppe externe (15, 18, 19) de l'échangeur de chaleur liquide-liquide, de forme cylindrique allongée, disposée avec son axe vertical lors de sa mise en service dans la cuve du réacteur, est constituée, au moins dans sa partie inférieure, par une virole (18, 19) d'une épaisseur telle qu'elle ne se déforme pas sous l'effet des contraintes dues à un accident prévisible dans le réacteur nucléaire, percée, sur toute la hauteur immergée dans le fluide de refroidissement primaire, d'ouvertures (21, 22) permettant la circulation naturelle du fluide de refroidissement en contact avec les tubes (25) du faisceau (20) disposés à l'intérieur de la virole (18, 19) et comportant chacun une partie droite d'arrivée et une partie droite de retour du liquide, de grande longueur séparées par une partie en hélice formant une boucle à faible nombre de spires ayant une inclinaison faible par rapport au plan horizontal, le diamètre d'enroulement des tubes (25) étant constant et identique pour tous les tubes et très légèrement inférieur au diamètre intérieur de la virole (18, 19) qui réalise le maintien des tubes (25), en cas de sollicitations externes.

2. Dispositif d'évacuation de chaleur suivant revendication 1, caractérisé par le fait que les boucles en hélice des tubes (25), disposés successivement dans là direction verticale, sont imbriquées de façon à constituer une hélice à pas multiple.

3. Dispositif d'évacuation de chaleur suivant la revendication 2, caractérisé par le fait que les boucles en hélice des tubes (25) du faisceau (20) disposées successivement dans la direction verticale de l'échangeur de chaleur sont décalées de 120° les unes par rapport aux autres si l'on considère une rotation autour de l'axe de l'enveloppe (15, 18, 19) de l'échangeur, les tubes constituant une hélice comportant trois tubes (25) par pas.

4. Dispositif d'évacuation de chaleur suivant l'une quelconque des revendications 1, 2 et 3, caractérisé par le fait que la virole à l'intérieur de laquelle est disposé le faisceau (20) de tubes (25) est constituée de deux parties successives (18, 19) dans la direction verticale, la partie supérieure (18) ayant une épaisseur plus grande que la partie inférieure (19).

5. Dispositif d'évacuation de chaleur suivant l'une quelconque des revendications 1, 2, 3 et 4, caractérisé par le fait que la virole (18, 19) comporte une partie rétreinte (35) à son extrémité inférieure pour maintenir le faisceau (20) en cas de rupture de celui-ci.

6. Dispositif d'évacuation de chaleur suivant l'une quelconque des revendications 1, 2, 3, 4 et 5, caractérisé par le fait que des pièces de centrage (27) et de maintien du faisceau (20) sont fixées sur la paroi intérieure de la virole (18, 19).

7. Dispositif d'évacuation de chaleur suivant l'une quelconque des revendications 1, 2, 3, 4, 5 et 6, caractérisé par le fait que les parties droites des tubes (25) sont maintenues en position à l'intérieur de l'enveloppe (18, 19) de l'échangeur de chaleur par des entretoises (30) constituées par des bagues (31) disposées avec un certain jeu autour de chacune des parties droites des tubes (25) du faisceau (20) reliées entre elles et à une virole (34) fixée sur la paroi intérieure de l'enveloppe (18, 19) de l'échangeur de chaleur par l'intermédiaire de pièces de fixation (32).

8. Dispositif d'évacuation de chaleur suivant l'une quelconque des revendications 1, 2, 3, 4, 5 et 6, caractérisé par le fait que les parties droites des tubes (25) sont maintenues en position à l'intérieur de l'enveloppe (18, 19) de l'échangeur de chaleur par des ensembles de barres parallèles horizontales (40) fixées à l'enveloppe (18, 19) et disposées entre les tubes (25), plusieurs ensembles étant disposés les uns au-dessus des autres avec un certain espacement dans la direction verticale pour constituer une entretoise et les barres (40a) d'un ensemble faisant un angle constant avec les barres des autres ensembles (40b et 40c) de l'entretoise.

9. Dispositif d'évacuation suivant la revendication 8, caractérisé par le fait que les ensembles de barres sont groupés par jeux de trois ensembles (40a, 40b, 40c), les barres (40) d'un ensemble (40a) faisant un angle de 120° avec les barres des deux autres ensembles (40b, 40c).

**Claims**

1. A device for the emergency removal of the heat dissipated by a fast breeder liquid sodium cooled nuclear reactor when shut down, the heat removal device comprising at least one liquid-liquid heat exchanger composed of an external casing (15, 18, 19) open at its lower part, immersed in the primary cooling fluid and enclosing a bundle (20) of tubes (25) fixed on at least one tube-plate (12, 14) inside the casing (15, 18, 19) and each comprising a rectilinear part, then a helically wound part and another rectilinear part and inside which a liquid circulates whose cooling is provided in at least one exchanger using air for the cooling of the liquid, characterised by the fact that the external casing (15, 18, 19) of the liquid-liquid heat exchanger, of elongate cylindrical from, disposed with its axis vertical when brought into operation in the reactor vessel, is composed, at least in its lowert part, of a sleeve (18, 19) of a thickness such that it is not deformed under the effect of the stresses due to a foreseeable accident in the nuclear reactor, pierced, over the whole length immersed in the primary cooling fluid, with openings (21, 22) making possible the natural circulation of the cooling fluid in contact with the tubes (25) of the bundle (20) disposed inside the sleeve (18, 19) and each comprising a straight liquid input part and a straight liquid return part, of long length, separated by a helically wound part forming a loop with a small number of turns, inclined to a small extent with respect to the horizontal plane, the coil diameter of the tubes (25) being constant and identical for all the tubes and very slightly less than the internal diameter of the sleeve (18, 19) which holds the tubes (25) in place, in the event of external stresses.

2. The heat removal device as claimed in claim 1, characterised by the fact that the helically wound loops of the tubes (25), disposed successively in the vertical direction, are interleaved in such a way as to produce a multiple-pitch helix.

3. The heat removal device as claimed in claim 2, characterised by the fact that the helically wound loops of the tubes (25) of the bundle (20) disposed successively in the vertical direction of the heat exchanger are offset by 120° with respect to each other in relation to a rotation round the axis of the casing (15, 18, 19) of the exchanger, the tubes constituting a helix with three tubes (25) per pitch.

4. The heat removal device as claimed in any of claims 1, 2 and 3, characterised by the fact that the sleeve inside which the bundle (20) of tubes (25) is disposed is composed of two successive parts (18, 19) in the vertical direction the upper part (18) having a greater thickness than the lower part (19).

5. The heat removal device as claimed in any of claims 1, 2, 3 and 4, characterised by the fact that the sleeve (18, 19) includes a part (35) of smaller diameter at its lower end to retain the bundle (20) in the event of rupture of the latter.

6. The heat removal device as claimed in any of claims 1, 2, 3, 4 and 5, characterised by the fact that pieces (27) for centering and for retaining the bundle (20) are fixed on the interior wall of the sleeve (18, 19).

7. The heat removal device as claimed in any of claims 1, 2, 3, 4, 5 and 6, characterised by the fact that the straight parts of the tubes (25) are held in position inside the casing (18, 19) of the heat exchanger by cross-pieces (30) composed of collars (31), disposed with a certain clearance around each of the straight parts of the tubes (25) of the bundle (20) connected to each other and to a sleeve (34) fixed on the interior wall of the casing (18, 19) of the heat exchanger by means of fixing pieces (32).

8. The heat removal device as claimed in any of claims 1, 2, 3, 4, 5 and 6, characterised by the fact that the straight parts of the tubes (25) are held in position inside the casing (18, 19) of the heat exchanger by assemblies of horizontal parallel rods (40) fixed to the casing (18, 19) and disposed between the tubes (25), several assemblies being disposed one above the other with a certain spacing in the vertical direction to constitute a cross-piece and the rods (40a) of an assembly making a constant angle with the rods of the other assemblies (40b and 40c) of the cross-piece.

9. The removal device as claimed in claim 8, characterised by the fact that in the assemblies of rods are grouped in sets of three assemblies (40a, 40b, 40c), the rods (40) of one assembly (40a) making an angle of 120° with the rods of the two other assemblies (40b, 40c).

**Patentansprüche**

1. Sicherheitsvorrichtung zur Ableitung der beim Abschalten eines durch flüssiges Natrium gekühlten schnellen Brüters entstehenden-Wärme, wobei die Wärmeableitvorrichtung wenigstens einen an seinem Unterteil offenen Flüssigkeit-Flüssigkeit-Wärmetauscher aufweist, der in das Primärkühlfluid eintaucht und ein Bündel (20) von Rohren (25) einschließt, die an wenigstens einer rohrförmigen Platte (12, 14) innerhalb der Hülle (15, 18, 19) befestigt sind und jeweils aufweisen : einen geraden Teil, dann einen schraubenförmig gewickelten Teil und einen weiteren geraden Teil, und in denen eine Flüssigkeit zirkuliert, deren Kühlung durch wenigstens einen Tauscher erfolgt, der zur Kühlung der Flüssigkeit Luft verwendet, dadurch gekennzeichnet, daß die äußere Hülle (15, 18, 19) des Flüssigkeit-Flüssigkeit-Wärmetauschers, die eine zylindrische langgestreckte Form hat und deren Achse während des Betriebs im Reaktorbehälter senkrecht ist, wenigstens in ihrem Unterteil durch einen Mantel (18, 19) gebildet ist, der eine solche Dicke hat, daß er sich unter der Wirkung von Spannungen nicht verformt, die durch einen vorhersehbaren Unfall im Kernreaktor bedingt sind, und der auf der ganzen in das Primärkühlfluid eingetauchten Höhe von Öffnungen (21, 22) durchbrochen ist, die die natürliche Zirkulation des Kühlfluids in Berührung mit den Rohren (25) des Bündels (20) gestatten, die innerhalb des Mantels (18, 19) angeordnet sind und jeweils einen geraden Einlaufteil und einen geraden Rücklaufteil großer Länge für die Flüssigkeit aufweisen, die durch einen schraubenförmigen Teil getrennt sind, der eine Schleife mit geringer Windungszahl und mit geringer Neigung gegenüber der senkrechten Ebene bildet, wobei der Wicklungsdurchmesser der Rohre (25) für alle Rohre konstant und identisch sowie sehr geringfügig kleiner als der Innendurchmesser des Mantels (18, 19) ist, der im Fall von äusseren Belastungen das Halten der Rohre (25) bewerkstelligt.

2. Wärmeableitvorrichtung nach Anspruch 1, dadurch gekennzeichnet, daß die schraubenförmigen Windungen der Rohre (25), die in senkrechter Richtung aufeinanderfolgend angeordnet sind, derart ineinandergeschachtelt sind, daß sie eine Wendel mit mehrfacher Ganghöhe bilden.

3. Wärmeableitvorrichtung nach Anspruch 2, dadurch gekennzeichnet, daß die schraubenförmigen Windungen der Rohre (25) des Bündels (20), die in senkrechter Richtung des Wärmetauschers aufeinanderfolgend angeordnet sind, gegeneinander um 120° versetzt sind, wenn man eine Drehung um die Achse des Mantels (15, 18, 19) des Tauschers betrachtet, wobei die eine Wendel bildenden Rohre drei Rohre (25) je Ganghöhe umfassen.

4. Wärmeableitvorrichtung nach einem der Ansprüche 1, 2 und 3, dadurch gekennzeichnet, daß der Mantel, in dem sich das Bündel (20) von Rohren (25) befindet, aus zwei in senkrechter Richtung aufeinanderfolgenden Teilen (18, 19) besteht, wobei das Oberteil (18) eine größere Dicke als das Unterteil (19) hat.

5. Wärmeableitvorrichtung nach einem der Ansprüche 1, 2, 3 und 4 dadurch gekennzeichnet, daß der Mantel (18, 19) an seinem unteren Ende einen eingeschnürten Teil (35) hat, um das Bündel (20) im Fall von dessen Bruch zu halten.

6. Wärmeableitvorrichtung nach einem der Ansprüche 1, 2, 3, 4 und 5, dadurch gekennzeichnet, daß an der Innenwand des Mantels (18, 19) Teile zum Zentrieren (27) und Halten des Bündels (20) befestigt sind.

7. Wärmeableitvorrichtung nach einem der Ansprüche 1, 2, 3, 4, 5 und 6, dadurch gekennzeichnet, daß die geraden Teile der Rohre (25) innerhalb der Hülle (18, 19) des Wärmetauschers durch Zwischenwände (30) in Stellung gehalten werden, die durch Ringe (31) gebildet sind, die mit einem gewissen Spiel um jeden der geraden Teile der Rohre (25) des Bündels (20) angeordnet sind, die untereinander und mit einem Mantel (34) verbunden sind, der an der Innenwand der Hülle (18, 19) des Wärmetauschers mit Hilfe von Befestigungsteilen (32) befestigt ist.

8. Wärmeableitvorrichtung nach einem der Ansprüche 1, 2, 3, 4, 5, 6 und 7, dadurch gekennzeichnet, daß die geraden Teile der Rohre (25) innerhalb der Hülle (18, 19) des Wärmetauschers durch Anordnungen von parallelen waagerechten Stäben (40) in Stellung gehalten werden, die an der Hülle (18, 19) befestigt und zwischen den Rohren (25) angeordnet sind, wobei mehrere Anordnungen in einem gewissen Abstand in senkrechter Richtung übereinander angeordnet sind, um eine Zwischenwand zu bilden, und wobei die Stäbe (40a) einer Anordnung mit den Stäben der anderen Anordnungen (40b und 40c) der Zwischenwand einen konstanten Winkel einschließen.

9. Ableitvorrichtung nach Anspruch 8, dadurch gekennzeichnet, daß die Anordnungen von Stäben in Sätzen von drei Anordnungen (40a, 40b, 40c) gruppiert sind, wobei die Stäbe (40) einer Anordnung (40a) mit den Stäben zweier anderer Anordnungen (40b, 40c) einen Winkel von 120° einschließen.

Fig 2

Fig 1

0 083 545

Fig 3

Fig 4

Fig 5